# EUROPÄISCHE PATENTSCHRIFT

(11) **EP 2 079 288 B1**
(45) Veröffentlichungstag und Bekanntmachung des Hinweises auf die Patenterteilung: **16.04.2014**
(21) Anmeldenummer: 09150128.8
(22) Anmeldetag: 07.01.2009
(51) Int. Cl.: H05B 41/285, H05B 41/288, H05B 41/392, H05B 37/00

(54) **Elektronisches Vorschaltgerät sowie Schaltungsanordnung zum Dimmen von Gasentladungslampen**
Electronic pre-switching device and switching assembly for dimming gas discharge lamps
Appareil électronique et agencement de commutation destiné à atténuer des lampes à décharge

(30) Priorität: 10.01.2008 DE 102008000027
(43) Veröffentlichungstag der Anmeldung: 15.07.2009
(73) Patentinhaber: Kleinodt, Ralf, 39261 Zerbst (DE)
(72) Erfinder: Kleinodt, Ralf, 39261, Zerbst (DE); Gehlert, Uwe, 98693, Ilmenau (DE)
(74) Vertreter: Engel, Christoph Klaus

(56) Entgegenhaltungen:
- EP-A1- 1 718 128
- EP-A1- 1 973 388
- WO-A1-2007/003038
- US-A- 5 642 019
- US-A1- 2008 150 451

## Beschreibung

Die Erfindung betrifft ein elektronisches Vorschaltgerät zum Betrieb einer oder mehrerer Gasentladungslampen an einer Wechselspannungsquelle sowie eine Schaltungsanordnung zum Betrieb zahlreicher, räumlich verteilter Gasentladungslampen an einer Wechselspannungsquelle.

Aus der DE 601 01 978 T2 ist ein dimmbares elektronisches Vorschaltgerät, insbesondere für Leuchtstofflampen bekannt, welches zunächst Begrenzungsmittel für einen eingangsseitigen Wechselstrom umfasst. Der begrenzte Wechselstrom durchfließt einen Gleichrichter, woraufhin der gewandelte Gleichstrom einen Stromrichter durchfließt, der eine Spannungsaufwärts- oder -abwärtswandlung sowie eine Leistungsfaktorkorrektur erfährt. Weiterhin umfasst das vorbekannte elektronische Vorschaltgerät einen Umrichter zum Umrichten des Gleichstroms in eine hochfrequente Wechselspannung. Der Umrichter wird mit einer konstanten Frequenz betrieben. Ein Nachteil dieser Lösung besteht darin, dass die Dimmung der Leuchtstofflampen (d.h. die Regelung der Helligkeit der Lampen) mit einem geringen Wirkungsgrad erfolgt und dass die Kompensation der Blindleistung aufgrund der sich ändernden Spannung nicht ideal erfolgen kann.

Die DE 602 10 768 T2 zeigt ein Vorschaltgerät für eine Hochleistungsentladungslampe mit einem Leistungswandler, einem Dimmer und einem Controller, welcher den Leistungswandler steuert. Mithilfe des Controllers ist eine Spannungs-Leistungs-Abgabecharakteristik bereitzustellen, welche das Variieren der Lampenleistung mit einer überwachten veränderlichen Lampenspannung wiedergibt. Die Spannungs-Leistungs-Abgabecharakteristik definiert einen Spannungsbereich der effektiven Konstantleistungssteuerung, innerhalb dessen der Leistungswandler gesteuert wird. Diese Lösung erfordert einen hohen Aufwand, um merkliche Lampenleistungsdifferenzen beim Dimmen zu vermeiden.

Aus der DE 39 02 984 A1 ist ein elektronisches Vorschaltgerät für Leuchtstofflampen bekannt, welches zunächst einen Schaltregler umfasst, bei welchem von einer Gleichstromquelle Stromimpulse breitengesteuert durch die Primärseite eines Transformators getaktet werden. Auf der Sekundärseite des Transformators liegt eine im Wesentlichen von der Eingangsspannung der Gleichstromquelle unabhängige Wechselspannung an, die über eine Gleichricht- und Glättungseinheit einem Wechselrichter zugeführt wird. Der Ausgang des Wechselrichters ist auf einen Ausgang des Vorschaltgerätes geführt, an welchem die Leuchtstofflampe anzuschließen ist. Auch diese Lösung ermöglicht nur einen geringen Wirkungsgrad bei der Dimmung der Leuchtstofflampe.

Die DE 40 17 040 A1 zeigt eine Schaltungsanordnung zur Energieeinsparung von Gasentladungslampen, die in Drossel-Starter-Betrieb mit Reihen- und Parallelkompensation geschaltet sind. Bei dieser Schaltungsanordnung ist einem Triac einer Phasenanschnittsansteuerung ein einzelner Kaltleiter oder ein Kaltleiter in Reihe zu einer Induktivität parallel geschaltet. Der Phasenanschnitt wird über einen Gleichrichter und einen Transistor verzögert ein- und ausgeschaltet. Diese Lösung ist jedoch nur für wenige Anwendungen geeignet.

Die EP 1 718 128 A1 zeigt ein Vorschaltgerät für Gasentladungslampen, welches für den Anschluss an eine einphasige Wechselspannungsquelle vorgesehen ist. Es erfolgt eine Gleichrichtung und eine anschließende Wechselrichtung. Das Vorschaltgerät umfasst ein Filter zur Funkentstörung der Eingangswechselspannung. Die Frequenz der wechselgerichteten Wechselspannung ist in einem integrierten Schaltkreis festgelegt.

Die US5,677,602 zeigt ein Vorschaltgerät für Gasentladungslampen, welches eingangsseitig einen Input Conditioner aufweist. Diese Baugruppe soll eine gefilterte Gleichspannung ausgeben und kann beispielsweise für den Anschluss an das Wechselstromnetz vorgesehen sein, wofür sie einen Gleichrichter und ein Entstörfilter aufweist. Die Gleichspannung wird in eine Rechteckwechselspannung gewandelt, wobei die Frequenz zwischen 80 kHz und 500 kHz liegt. Hierfür ist ein Wechselrichter mit veränderbarer Frequenz vorhanden.

Aus der DE 102 05 552 A1 ist eine Schaltungsanordnung und ein Ansteuerverfahren zur energieoptimalen Helligkeitssteuerung von Gasentladungslampen bekannt. Diese Schaltungsanordnung umfasst zunächst eine Blindleistungskompensationsschaltung und einen Gleichrichter sowie einen Gleichspannungszwischenkreis und einen Wechselrichter. Der Wechselrichter stellt eine frequenzvariable und eine betragsmäßig konstant geregelte Trapezspannung bereit. Die Blindleistungskompensation erfolgt eingangsseitig, sodass eine Blindleistungskompensation an den Gasentladungslampen entfallen kann oder zumindest für kleinere Blindleistungen ausgelegt werden kann. Die aus der DE 102 05 552 A1 vorbekannte Lösung weist den Vorteil auf, dass die Gasentladungslampen energieoptimal und dimmbar betrieben werden können. Ein Nachteil dieser Lösung besteht darin, dass sie wegen der von ihr verursachten elektromagnetischen Störungen nur mehrphasig betrieben werden kann. Wird die Schaltungsanordnung einphasig betrieben, so sind die von ihr verursachten elektromagnetischen Störungen so groß, dass die üblichen Anforderungen an die elektromagnetische Verträglichkeit nicht erfüllt werden. Für die Verwendung in Einphasennetzen ist diese Schaltungsanordnung daher kaum geeignet.

Die Aufgabe der vorliegenden Erfindung besteht ausgehend von der DE 102 05 552 A1 darin, ein elektronisches Vorschaltgerät sowie eine Schaltungsanordnung dafür bereitzustellen, welche einen einphasigen energieoptimalen Betrieb von Gasentladungslampen ermöglicht, wobei die üblichen Anforderungen an die elektromagnetische Verträglichkeit, die z.B. in Normen und Betriebsvorschriften definiert sind, erfüllt werden sollen.

Die genannte Aufgabe wird durch ein elektronisches Vorschaltgerät gemäß dem beigefügten Anspruch 1 sowie durch eine Schaltungsanordnung gemäß dem beigefügten nebengeordneten Anspruch 10 erfüllt.

Das erfindungsgemäße elektronische Vorschaltgerät dient dem Betrieb mindestens einer Gasentladungslampe an einer Wechselspannungsquelle und umfasst zunächst einen Gleichrichter zur Gleichrichtung einer ersten Wechselspannung der Wechselspannungsquelle in eine Gleichspannung. Im Weiteren umfasst das Vorschaltgerät einen Wechselrichter zur Wechselrichtung der Gleichspannung in eine zweite Wechselspannung zur Versorgung der einen oder mehreren Gasentladungslampen. Die Frequenz der zweiten Wechselspannung ist veränderlich, wodurch ein energieoptimaler Betrieb oder auch ein dimmbarer Betrieb der Gasentladungslampe ermöglicht ist. Erfindungsgemäß ist der Gleichrichter zur Gleichrichtung einer einphasigen Wechselspannung der Wechselspannungsquelle ausgeführt. Somit kann das erfindungsgemäße Vorschaltgerät zum Betrieb einer oder mehrerer Gasentladungslampen an einem einphasigen Wechselspannungsnetz genutzt werden. Weiterhin umfasst das Vorschaltgerät ein Filter zur Funkentstörung der ersten Wechselspannung, sodass die gesetzten Anforderungen an die elektromagnetische Verträglichkeit des elektronischen Vorschaltgerätes erfüllt werden können.

Das erfindungsgemäße Vorschaltgerät weist den Vorteil auf, dass es universell einsetzbar ist, um einen energieoptimalen oder auch dimmbaren Betrieb von Gasentladungslampen, beispielsweise von Leuchtstofflampen oder Natriumdampfniederdrucklampen zu ermöglichen.

Das Filter des erfindungsgemäßen elektronischen Vorschaltgerätes umfasst bevorzugt ein erstes einstufiges Einzelfilter und ein zweites einstufiges Einzelfilter. Das erste Einzelfilter und das zweite Einzelfilter sind elektrisch zwischen einem zum Anschluss an die Wechselspannungsquelle vorgesehenen Eingang des Vorschaltgerätes und dem Gleichrichter geschaltet. Somit ist das Filter eingangsseitig angeordnet, wodurch vom elektronischen Vorschaltgerät erzeugte elektronmagnetische Störungen an einer Rückwirkung auf die Wechselspannungsquelle weitgehend gehindert sind. Die Ausführung zweier einstufiger Einzelfilter erlaubt einerseits die Erfüllung strenger Anforderungen an die elektromagnetische Verträglichkeit und andererseits eine kostengünstige Herstellung des elektronischen Vorschaltgerätes.

Bei einer bevorzugten Ausführungsform des elektronischen Vorschaltgerätes ist das erste Einzelfilter alleinig in einem elektromagnetisch schirmenden Gehäuse angeordnet, während das zweite Einzelfilter durch diskrete elektronische Bauelemente gebildet ist, die gegenüber dem Gleichrichter und dem Wechselrichter elektromagnetisch ungeschirmt angeordnet sind. Diese Ausführungsform weist den Vorteil auf, dass der Herstellungsaufwand nochmals gesenkt ist. Es ist beispielsweise nicht erforderlich, ein Einzelfilter zur Unterdrückung eines tieffrequenten Bandes gegenüber dem Gleichrichter und dem Wechselrichter elektromagnetisch zu schirmen, sodass auf ein entsprechendes schirmendes Gehäuse für das zweite Einzelfilter oder aber auch ein größeres gemeinsames Gehäuse für beide Einzelfilter verzichtet werden kann.

Die elektronischen Bauelemente des zweiten Einzelfilters sind bevorzugt gemeinsam mit elektronischen Bauelementen des Gleichrichters und des Wechselrichters auf einem gemeinsamen Schaltungsträger, beispielsweise einer Leiterplatte angeordnet. Hingegen kann das erste Einzelfilter beispielsweise durch eine vorgefertigte Baugruppe gebildet sein, welche als eigenständige Komponente in das elektronische Vorschaltgerät integriert ist. Derartige vorgefertigte einstufige Filterbaugruppen sind auch für größere Betriebsströme kostengünstig verfügbar. Ebenso ist es kostengünstig, die elektronischen Bauelemente des zweiten Einzelfilters auf einem gemeinsamen Schaltungsträger mit den übrigen Bauelementen des elektronischen Vorschaltgerätes zu realisieren.

Bei einer bevorzugten Ausführungsform des elektronischen Vorschaltgerätes wird durch das Filter ein Frequenzband unterdrückt, welches durch ein erstes Teilband und durch ein zweites Teilband gebildet ist. Das erste Teilband wird insbesondere vom ersten Einzelfilter unterdrückt und das zweite Teilband insbesondere vom zweiten Einzelfilter unterdrückt. Das erste Teilband umfasst einen höheren Frequenzbereich als das zweite Teilband. Durch die beiden Einzelfilter werden elektromagnetische Störungen in einem großen Frequenzbereich von beispielsweise 10 kHz bis 30 MHz unterdrückt. Das erste Einzelfilter unterdrückt insbesondere die hochfrequenten Störungen, wofür es auch ein schirmendes Gehäuse aufweist.

Bei einer weiteren bevorzugten Ausführungsform des elektronischen Vorschaltgerätes umfasst es weiterhin ein Ausgangsfilter zur Funkentstörung der zweiten Wechselspannung, welches elektrisch zwischen dem Wechselrichter und einem zum Anschluss an die Gasentladungslampe vorgesehenen Ausgang des Vorschaltgerätes geschaltet ist. Das Ausgangsfilter ermöglicht eine ausgangsseitige Unterdrückung elektromagnetischer Störungen, wodurch erhöhte Anforderungen an die elektromagnetische Verträglichkeit erfüllt werden.

Bei der zweiten Wechselspannung handelt es sich bevorzugt um eine trapezförmige Wechselspannung mit einem konstanten Effektivwert der Ausgangsspannung. Die trapezförmige Wechselspannung erlaubt einen energieoptimalen Betrieb der Gasentladungslampe. Alternativ sind auch andere Spannungsformen, wie beispielsweise eine modifizierte Trapezspannung verwendbar.

Die Verwendung einer frequenzveränderlichen Wechselspannung mit einem konstanten Effektivwert ermöglicht eine effiziente Helligkeitsteuerung der Gasentladungslampe.

Das elektronische Vorschaltgerät umfasst bevorzugt weiterhin einen Tiefsetzsteller, durch welchen die Gleichspannung absenkbar ist. Dies ist beispielsweise dann erforderlich, wenn die Gleichspannung wesentlich höher als die erste Wechselspannung ist, aber die Gasentladungslampen eine Betriebsspannung in Höhe der ersten Wechselspannung benötigen. Der Tiefsetzsteller ist elektrisch zwischen den Gleichrichter und den Wechselrichter zu schalten.

Das erfindungsgemäße elektronische Vorschaltgerät umfasst bevorzugt weiterhin ein Leistungsfaktorkorrekturfilter zur Verringerung der Blindstromanteile der ersten Wechselspannung. Das Leistungsfaktorkorrekturfilter ist elektrisch zwischen den Gleichrichter und den Wechselrichter, beispielsweise zwischen den Gleichrichter und den Tiefsetzsteller zu schalten. Mithilfe des Leistungsfaktorkorrekturfilters werden die Anforderungen hinsichtlich einer maximal zulässigen Phasenverschiebung des elektronischen Vorschaltgerätes erfüllt. Gleichzeitig kann das Leistungsfaktorkorrekturfilter ein drittes Einzelfilter des Filters zur Funkenstörung bilden.

Der Wechselrichter des erfindungsgemäßen elektronischen Vorschaltgerätes ist bevorzugt durch eine Brückenschaltung mit einem einphasigen Ausgang gebildet. Derartige Wechselrichter sind kostengünstig herstellbar und erlauben den Anschluss ein oder mehrerer Gasentladungslampen. Alternativ weist der Wechselrichter einen zweiphasigen Ausgang zur Versorgung mehrerer Gasentladungslampen auf, wodurch beispielsweise die Ströme in den Leitungen zu den Gasentladungslampen gesenkt werden können.

Bei einer alternativen Ausführungsform des elektronischen Vorschaltgerätes weist dieses eingangsseitig eine Blindleistungskompensation auf. Hierdurch kann die üblicherweise an einer Gasentladungslampe durch einen Kondensator gebildete Blindleistungskompensation weitgehend oder vollständig ersetzt werden. Somit können beispielsweise solche Gasentladungslampen an das erfindungsgemäße elektronische Vorschaltgerät geschaltet werden, welche lediglich eine Vorschaltdrossel, aber keinen Parallelkondensator aufweisen. Grundsätzlich kann eine Blindleistungskompensation auch ausschließlich mit dem Leistungsfaktorkorrekturfilter erfolgen.

Das erfindungsgemäße elektronische Vorschaltgerät ist bevorzugt zum dimmbaren Betrieb von Natriumdampfniederdrucklampen oder Leuchtstofflampen zu verwenden. Jedoch ist es auch für andere Gasentladungslampen, wie beispielsweise Hochdruckgasentladungslampen geeignet.

Gemäß der Erfindung wird weiterhin eine Schaltungsanordnung zum Betrieb räumlich verteilter Gasentladungslampen an einer Wechselspannungsquelle bereitgestellt. Die Wechselspannung der Wechselspannungsquelle wird über eine Leitungsstrecke mit einem Kabel, welches mindestens vier Leiter besitzt, verteilt. Erfindungsgemäß wird an einem ersten Paar der Leiter eine einphasige Wechselspannung der Wechselspannungsquelle angelegt. Das erste Paar der Leiter ist elektrisch mit einem Eingang eines erfindungsgemäßen Vorschaltgerätes verbunden. An einem zweiten Paar der Leiter ist eine Ausgangsspannung des Vorschaltgerätes angelegt. Das zweite Paar der Leiter ist elektrisch an die Gasentladungslampen angeschlossen. Die erfindungsgemäße Schaltungsanordnung erlaubt den Betrieb mehrerer räumlich verteilter Gasentladungslampen mit nur einem Vorschaltgerät, wofür beispielsweise bereits vorhandene mehradrige Leitungssysteme verwendet werden können. In vielen Fällen sind räumlich verteilte Gasentladungslampen an einem bereits bestehenden Kabelsystem zu betreiben, welches vier oder fünf Leiter für einen mehrphasigen Betrieb aufweist. Bei der Verwendung mehrphasig zu versorgender Vorschaltgeräte muss entweder jeder Gasentladungslampe ein Vorschaltgerät zugeordnet werden, welches unmittelbar an der Gasentladungslampe anzuordnen ist, oder ein Vorschaltgerät kann leistungsbedingt nur eine begrenzte Anzahl von Lampen versorgen. Ohne die Verlegung zusätzlicher Kabel ist beispielsweise eine Kaskadierung mehrerer Lampengruppen nicht möglich. Die Verwendung eines oder mehrerer erfindungsgemäßer Vorschaltgeräte erlaubt demgegenüber den Betrieb mehrerer Gasentladunglampen an jeweils einem Vorschaltgerät und die Kaskadierung solcher Lampengruppen, wofür das bestehende Leitungssystem (in der Regel 5-adrig) genutzt werden kann.

Bei einer bevorzugten Ausführungsform der erfindungsgemäßen Schaltungsanordnung sind mehrere Abschnitte der Leitungsstrecke ausgebildet, zwischen denen das zweite Paar der Leiter jeweils elektrisch getrennt ist. In jedem Abschnitt der Leitungsstrecke ist am zweiten Paar der Leiter die Ausgangsspannung jeweils eines von mehreren der Vorschaltgeräte angelegt. Jedes der Vorschaltgeräte erlaubt den Anschluss einer oder mehrerer Gasentladungslampen in dem jeweiligen Abschnitt der Leitungsstrecke. Sämtliche Vorschaltgeräte der Schaltungsanordnung werden durch die Wechselspannung am ersten Paar der Leiter gespeist. In jedem Abschnitt der Leitungsstrecke können mehrere der Gasentladungslampen elektrisch am zweiten Paar der Leiter angeschlossen sein. Somit können mit jedem der Vorschaltgeräte mehrere räumlich verteilte Gasentladungslampen betrieben werden.

Die erfindungsgemäße Schaltungsanordnung eignet sich beispielsweise für Natriumdampfniederdrucklampen oder Leuchtstofflampen, die jeweils mit einer Spule in Reihe geschaltet sind. Die erforderliche Blindleistungskompensation kann in den erfindungsgemäßen Vorschaltgeräten erfolgen. Die erfindungsgemäße Schaltungsanordnung ist insbesondere zum Betrieb räumlich verteilter Natriumdampfniederdrucklampen für die Straßenbeleuchtung geeignet, wobei für die Installation der erfindungsgemäßen Schaltungsanordnung ein bereits verlegtes Kabel mit vier oder fünf Leitern genutzt werden kann.

Weitere Vorteile, Einzelheiten und Weiterbildungen der Erfindung ergeben sich aus den nachfolgenden Beschreibungen zweier Ausführungsformen, unter Bezugnahme auf die Zeichnung. Es zeigen:
- Fig. 1:: einen elektrischen Schaltplan einer bevorzugten Ausführungsform eines erfindungsgemäßen elektronischen Vorschaltgerätes; und
- Fig. 2:: einen elektrischen Blockschaltplan einer erfindungsgemäßen Schaltungsanordnung.

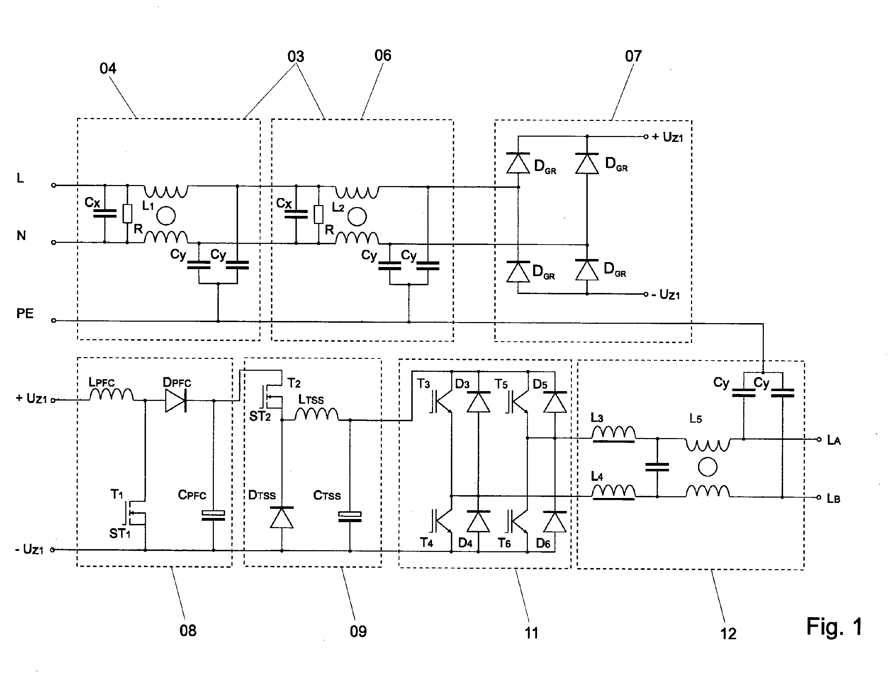

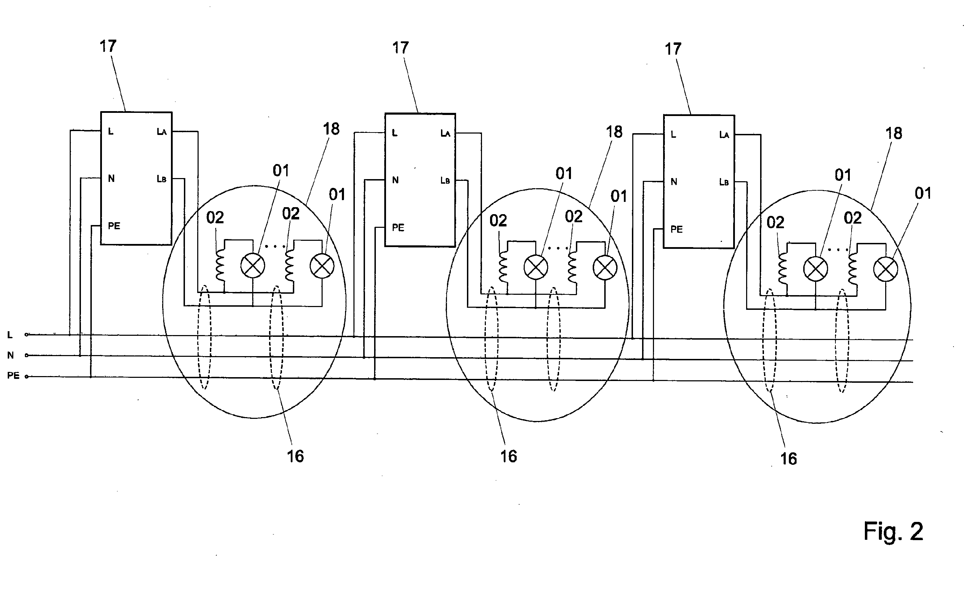

Fig. 1 zeigt einen elektrischen Schaltplan einer bevorzugten Ausführungsform eines elektronischen Vorschaltgerätes zum Betrieb einer oder mehrerer Gasentladungslampen 01 (gezeigt in Fig. 2) an einer Wechselspannungsquelle. Das elektronische Vorschaltgerät weist eingangsseitig drei Anschlüsse zum Anschluss an die Wechselspannungsquelle auf. Ein Anschluss L ist für einen Außenleiter der Wechselspannungsquelle vorgesehen; ein Anschluss N ist für einen Neutralleiter der Wechselspannungsquelle vorgesehen; und ein Anschluss PE ist für einen Schutzleiter der Wechselspannungsquelle vorgesehen. Das elektronische Vorschaltgerät ist grundsätzlich für den Anschluss an eine einphasige Wechselspannungsquelle vorgesehen. Hierbei kann es sich auch um eine einzige der Phasen einer mehrphasigen Wechselspannungsquelle handeln. Das erfindungsgemäße elektronische Vorschaltgerät ist auch für einen Betrieb ohne Schutzleiter geeignet. Ausgangsseitig weist das elektronische Vorschaltgerät zwei Anschlüsse L_{A}, L_{B} zum Anschluss an die Gasentladungslampe 01 auf. Die Gasentladungslampe 01 kann in Reihe mit einer Spule 02 (gezeigt in Fig. 2) geschaltet sein und/oder mit einem Kondensator parallel geschaltet sein. Die Darstellung im elektrischen Schaltbild ist zweigeteilt. Elektrische Anschlüsse +U_{Z1}, -U_{Z1} im ersten Teil des Schaltplanes sind elektrisch mit Anschlüssen +U_{Z1}, -U_{Z1} im zweiten Teil des Schaltplanes verbunden.

Das erfindungsgemäße elektronische Vorschaltgerät weist einen Filter 03 zur Funkenstörung gegenüber der eingangsseitigen Wechselspannung auf. Durch das Filter 03 werden die Anforderungen an das elektronische Vorschaltgerät hinsichtlich dessen elektromagnetischer Verträglichkeit erfüllt, sodass es an öffentliche Stromversorgungsnetze anschließbar ist. Das Filter 03 umfasst ein erstes einstufiges Einzelfilter 04 und ein zweites einstufiges Einzelfilter 06. Bei dem ersten Einzelfilter 04 handelt es sich um ein Einzelfilter mit einem separaten elektromagnetisch schirmenden Gehäuse, wodurch die elektronischen Bauelemente des ersten Einzelfilters 04 gegenüber den anderen elektronischen Bauelementen des elektronischen Vorschaltgerätes elektromagnetisch abgeschirmt sind. Durch das erste Einzelfilter 04 werden insbesondere Störanteile mit einer hohen Frequenz, von beispielsweise mehr als 500 kHz unterdrückt. Das erste Einzelfilter 04 kann derart ausgeführt sein, dass Störanteile von bis zu 50 MHz, 100 MHz oder mehr wirksam unterdrückt werden. Das erste Einzelfilter 04 bedarf einer Spule mit einer Induktivität von beispielsweise nur 0,5 mH, sodass das erste Einzelfilter 04 mit einem geringen Raumbedarf ausgeführt werden kann. Das erste Einzelfilter 04 ist durch ein vorgefertigtes einstufiges, voll geschirmtes Filter gebildet, welches mit den beschriebenen Parametern kostengünstig verfügbar ist. Somit bildet das erste Einzelfilter 04 eine separate Baugruppe innerhalb des erfindungsgemäßen elektronischen Vorschaltgerätes aus.

Das zweite Einzelfilter 06 dient insbesondere der Unterdrückung von Störanteilen mit einer Frequenz von bis zu etwa 1 MHz. Die elektronischen Bauelemente des zweiten Einzelfilters 06 befinden sich mit weiteren elektronischen Bauelementen des elektronischen Vorschaltgerätes auf einem gemeinsamen Schaltungsträger. Die Spule L₂ des zweiten Einzelfilters 06 weist eine Induktivität von etwa 5 mH auf. Eine derartige Spule, welche beispielsweise für einen Strom von 16 A ausgelegt ist, erfordert einen erhöhten Raumbedarf. Da die Spule L₂ jedoch ungeschirmt gemeinsam mit anderen Bauelementen auf einen gemeinsamen Schaltungsträger montiert ist, kann sie dennoch aufwandsarm und platzsparend im elektronischen Vorschaltgerät realisiert werden. Würde eine solche Spule in einem zweistufigen geschirmten Filter realisiert, so wäre dieses Filter sehr groß und teuer.

Die durch das Filter 03 gefilterte Wechselspannung der Wechselspannungsquelle liegt an einem Gleichrichter 07 an. Der Gleichrichter 07 dient der Gleichrichtung einer einphasigen Wechselspannung in eine Gleichspannung U_{Z1}. Der Gleichrichter 07 umfasst vier Dioden D_{GR}, die in Brücke geschaltet sind. Bei der Gleichspannung U_{Z} handelt es sich somit um eine pulsierende Gleichspannung. Natürlich können auch andere Gleichrichterschaltungen zur Bereitstellung der Gleichspannung verwendet werden.

Der Gleichrichter 07 ist an ein Leistungsfaktorkorrekturfilter 08 angeschlossen, welches zur Verringerung der Blindstromanteile, die beim Betrieb der Gasentladungslampe 01 entstehen, dient. Diese Blindleistungskompensation bewirkt eine Verringerung der Blindstromanteile der durch die Wechselspannungsquelle fließenden Ströme. Beim Betrieb des elektronischen Vorschaltgerätes an einer Wechselspannung von beispielsweise 230 V beträgt die Gleichspannung am Ausgang des Leistungsfaktorkorrekturfilters 08 etwa 500 V. Diese erhöhte Gleichspannung wird durch einen Tiefsetzsteller 09 auf etwa 250 V heruntergesetzt. Der Tiefsetzsteller 09 ist an einen Wechselrichter 11 angeschlossen, mit welchem die tiefgesetzte Gleichspannung in eine einphasige Ausgangswechselspannung wechselgerichtet wird. Der Wechselrichter 11 umfasst vier MOS-FET T₃, T₄, T₅, T₆, die in Brücke geschaltet sind. Die MOS-FET T₃, T₄, T₅, T₆ werden durch eine Steuerelektronik (nicht gezeigt) derart angesteuert, dass die Ausgangswechselspannung trapezförmig ist, wobei die Frequenz der Ausgangswechselspannung mithilfe der Steuerelektronik veränderbar ist. Die Veränderung der Frequenz der Ausgangswechselspannung ermöglicht ein Dimmen der Gasentladungslampe 01. Der Effektivwert der Ausgangswechselspannung bleibt bei einer Veränderung der Frequenz konstant und beträgt beim Betrieb an einer Wechselspannungsquelle von 230 V ebenfalls 230 V, also angepasst an die herkömmlichen Lampen, die in vorhandenen Installationen eingebaut sind. Eine Frequenzveränderung der Ausgangswechselspannung erlaubt neben einer Dimmung der Gasentladungslampe 01 auch eine Betriebsart der Gasentladungslampe 01, bei welcher die Helligkeit der Gasentladungslampe 01 kaum wahrnehmbar gemindert ist, jedoch die erforderliche elektrische Leistung um bis zu 70 % gesenkt ist. Am Ausgang des Wechselrichters 11 ist ein Ausgangsfilter 12 angeschlossen, durch welches Störanteile der Ausgangswechselspannung unterdrückt werden.

Fig. 2 zeigt ein Blockschaltbild einer erfindungsgemäßen Schaltungsanordnung zum Betrieb räumlich verteilter Gasentladungslampen 01 an einer Wechselspannungsquelle. Bei den räumlich verteilten Gasentladungslampen 01 kann es sich beispielsweise um Lampen von Straßenleuchten handeln, die entlang einer Straße angeordnet sind. Die erfindungsgemäße Schaltungsanordnung erfordert eine Leitungsstrecke, welche durch ein Kabel mit mindestens vier Leitern gebildet ist und sich entlang der räumlichen Verteilung der Gasentladungslampen 01 erstreckt. Eine solche Leitungsstrecke ist durch ein fünfadriges Kabel 16 gebildet, bei welchem es sich um ein Kabel für einen Anschluss an eine dreiphasige Wechselspannungsquelle mit einem Schutzleiter PE handelt. Im Falle der erfindungsgemäßen Schaltungsanordnung wird nur ein Außenleiter L mit einer Phase beschaltet und es wird ein Neutralleiter N angeschlossen. Für die erfindungsgemäße Schaltungsanordnung kann ein bereits verlegtes Kabel verwendet werden, was in vielen Fällen eine aufwandsarme Realisierung der erfindungsgemäßen Schaltungsanordnung ermöglicht. Ein Schutzleiter PE ist grundsätzlich für den Betrieb der erfindungsgemäßen Schaltungsanordnung nicht erforderlich.

Die erfindungsgemäße Schaltungsanordnung umfasst drei erfindungsgemäße elektronische Vorschaltgeräte 17, wie sie in Fig. 1 gezeigt sind. Die elektronischen Vorschaltgeräte 17 sind eingangsseitig jeweils an den Außenleiter L, den Neutralleiter N und (soweit vorhanden) den Schutzleiter PE angeschlossen.

Ausgangsseitig sind die elektronischen Vorschaltgeräte 17 mit den Anschlüssen L_{A} und L_{B} an zwei weitere Leiter des Kabels 16 angeschlossen. Über die beiden Leiter L_{A}, L_{B} werden mehrere parallel geschaltete Gasentladungslampen 01 mit einer jeweils in Reihe geschalteten Spule 02 betrieben. Durch jeweils eines der elektronischen Vorschaltgeräte 17 werden die Gasentladungslampen 01 in jeweils einem von mehreren Abschnitten 18 betrieben. Bei den Abschnitten 18 kann es sich beispielsweise um Straßenabschnitte handeln, sodass alle Gasentladungslampen 01 der Straßenleuchten in diesem Straßenabschnitt durch eines der mehreren elektronischen Vorschaltgeräte 17 gespeist wird. Das Kabel 16 dient gleichzeitig dem Anschluss des elektronischen Vorschaltgerätes 17 an die einphasige Wechselspannungsquelle und der Verteilung der Ausgangswechselspannung des elektronischen Vorschaltgerätes 17 zu den räumlich verteilten Gasentladungslampen 01. Zwischen jeweils zwei Abschnitten 18 sind die Leiter L_{A}, L_{B} des Kabels 16 elektrisch aufgetrennt, sodass sie in jedem der Abschnitte 18 die Spannung des zugeordneten elektronischen Vorschaltgerätes 17 führen. In jedem der Abschnitte 18 können beispielsweise 25 durch Natriumdampfhochdrucklampen gebildete Gasentladungslampen 01 mit jeweils einer Leistung von 80 W betrieben werden. Somit ist für eine große Anzahl von Gasentladungslampen 01 jeweils nur eines der elektronischen Vorschaltgeräte 17 erforderlich. Gleichzeitig ist es aufgrund der einphasigen Betriebsweise des elektronischen Vorschaltgerätes 17 möglich, sowohl die Wechselspannung der Wechselspannungsquelle als auch die Ausgangswechselspannung über ein Kabel 16 mit vier oder fünf Leitern zu verteilen.

### Bezugszeichenliste

- 01 -: Gasentladungslampe
- 02 -: Spule an der Gasentladungslampe
- 03 -: Filter
- 04 -: erstes Einzelfilter
- 05 -: -
- 06 -: zweites Einzelfilter
- 07 -: Gleichrichter
- 08 -: Leistungsfaktorkorrekturfilter
- 09 -: Tiefsetzsteller
- 10 -: -
- 11 -: Wechselrichter
- 12 -: Ausgangsfilter
- 13 -: -
- 14 -: -
- 15 -: -
- 16 -: Kabel
- 17 -: elektronisches Vorschaltgerät
- 18 -: Abschnitt
- L -: Außenleiter
- N -: Neutralleiter
- PE -: Schutzleiter
- U_{Z1} -: Gleichspannung
- L_{A} -: erster Leiter für die Ausgangswechselspannung
- L_{B} -: zweiter Leiter für die Ausgangswechselspannung
- D_{GR} -: Diode des Gleichrichters
- L₁ -: Spule des ersten Einzelfilters
- L₂ -: Spule des zweiten Einzelfilters
- T₃ -: erster MOS-FET des Wechselrichters
- T₄ -: zweiter MOS-FET des Wechselrichters
- T₅ -: dritter MOS-FET des Wechselrichters
- T₆ -: vierter MOS-FET des Wechselrichters

## Patentansprüche

1. Elektronisches Vorschaltgerät zum Betrieb mindestens einer Gasentladungslampe (01) an einer Wechselspannungsquelle, umfassend einen Gleichrichter (07) zur Gleichrichtung einer ersten Wechselspannung der Wechselspannungsquelle in eine Gleichspannung; und einen Wechselrichter (11) zur Wechselrichtung der Gleichspannung in eine zweite Wechselspannung zur Versorgung der Gasentladungslampe (01), wobei die Frequenz der zweiten Wechselspannung veränderlich ist, wobei der Gleichrichter (07) zur Gleichrichtung einer einphasigen Wechselspannung der Wechselspannungsquelle ausgeführt ist, wobei das Vorschaltgerät weiterhin ein Filter (03) zur Funkentstörung der ersten Wechselspannung umfasst, wobei das Filter (03) ein erstes einstufiges Einzelfilter (04) und ein zweites einstufiges Einzelfilter (06) umfasst, die elektrisch zwischen einem zum Anschluss an die Wechselspannungsquelle vorgesehenen Eingang (L, N) des Vorschaltgerätes und dem Gleichrichter (07) geschaltet sind, **dadurch gekennzeichnet, dass** das erste Einzelfilter (04) alleinig in einem elektromagnetisch schirmenden Gehäuse angeordnet ist, und dass das zweite Einzelfilter (06) durch elektronische Bauelemente gebildet ist, die gegenüber dem Gleichrichter (07) und dem Wechselrichter (11) elektromagnetisch ungeschirmt angeordnet sind.

2. Elektronisches Vorschaltgerät nach Anspruch 1, **dadurch gekennzeichnet, dass** die elektronischen Bauelemente (L₂) des zweiten Einzelfilters (06) gemeinsam mit elektronischen Bauelementen (D_{GR}) des Gleichrichters (07) und des Wechselrichters (11) auf einem Schaltungsträger angeordnet sind.

3. Elektronisches Vorschaltgerät nach Anspruch 1 oder 2,
**dadurch gekennzeichnet, dass** ein durch das Filter (03) unterdrücktes Frequenzband durch ein erstes Teilband und durch ein zweites Teilband gebildet ist, wobei das erste Teilband einen höheren Frequenzbereich als das zweite Teilband umfasst; und wobei das erste Teilband vom ersten Einzelfilter (04) unterdrückt wird und das zweite Teilband vom zweiten Einzelfilter (06) unterdrückt wird.

4. Elektronisches Vorschaltgerät nach einem der Ansprüche 1 bis 3, **dadurch gekennzeichnet, dass** es ein Ausgangsfilter (12) zur Funkentstörung der zweiten Wechselspannung umfasst, welches elektrisch zwischen dem Wechselrichter (11) und einem zum Anschluss an die Gasentladungslampe (01) vorgesehenen Ausgang (L_{A}, L_{B}) des Vorschaltgerätes geschaltet ist.

5. Elektronisches Vorschaltgerät nach einem der Ansprüche 1 bis 4, **dadurch gekennzeichnet, dass** die zweite Wechselspannung trapezförmig ist und einen konstanten Effektivwert aufweist.

6. Elektronisches Vorschaltgerät nach einem der Ansprüche 1 bis 5, **dadurch gekennzeichnet, dass** es weiterhin einen Tiefsetzsteller (09) umfasst, durch welchen die Gleichspannung absenkbar ist.

7. Elektronisches Vorschaltgerät nach einem der Ansprüche 1 bis 6, **dadurch gekennzeichnet, dass** es weiterhin ein Leistungsfaktorkorrekturfilter (08) zur Verringerung der Blindstromanteile der ersten Wechselspannung umfasst, welches vorzugsweise elektrisch zwischen den Gleichrichter (07) und den Wechselrichter (11) geschaltet ist.

8. Elektronisches Vorschaltgerät nach einem der Ansprüche 1 bis 7, **dadurch gekennzeichnet, dass** der Wechselrichter (11) durch eine Brückenschaltung mit einem einphasigen Ausgang gebildet ist oder einen zweiphasigen Ausgang zur Versorgung mehrerer Gasentladungslampen (01) aufweist.

9. Elektronisches Vorschaltgerät nach einem der Ansprüche 1 bis 8, **dadurch gekennzeichnet, dass** es eingangsseitig eine Blindleistungskompensationseinheit umfasst, durch welche eine Blindleistungskompensation an der Gasentladungslampe (01) zumindest weitgehend ersetzt ist.

10. Schaltungsanordnung zum Betrieb räumlich verteilter Gasentladungslampen (01) an einer Wechselspannungsquelle, deren Wechselspannung über eine Leitungsstrecke mit einem Kabel (16) mit mindestens vier Leitern (L, N, L_{A}, L_{B}) verteilt wird, wobei die Schaltungsanordnung Gasentladungslampen und eine Leitungsstrecke mit einem Kabel mit mindestens vier Leitern (L, N, L_{A}, L_{B}) aufweist, **dadurch gekennzeichnet dass**, ein erstes Paar der Leiter (L, N) ausgelegt ist an eine einphasige Wechselspannung angeschlossen zu werden,
wobei das erste Paar der Leiter (L, N) elektrisch mit einem Eingang eines Vorschaltgerätes (17) nach einem der Ansprüche 1 bis 9 verbunden ist; und dass an einem zweiten Paar der Leiter (L_{A}, L_{B}) eine Ausgangsspannung des Vorschaltgerätes (17) angelegt ist, wobei das zweite Paar der Leiter (L_{A}, L_{B}) elektrisch an die Gasentladungslampen (01) angeschlossen ist.

11. Schaltungsanordnung nach Anspruch 10, **dadurch gekennzeichnet, dass** mehrere Abschnitte (18) der Leitungsstrecke ausgebildet sind, zwischen denen das zweite Paar der Leiter (L_{A}, L_{B}) elektrisch getrennt ist, wobei in jedem Abschnitt (18) am zweiten Paar der Leiter (L_{A}, L_{B}) die Ausgangsspannung jeweils eines von mehreren der Vorschaltgeräte (17) angelegt ist.

12. Schaltungsanordnung nach Anspruch 11, **dadurch gekennzeichnet, dass** mindestens in einem der Abschnitte (18) der Leitungsstrecke mehrere der Gasentladungslampen (01) elektrisch am zweiten Paar der Leiter (L_{A}, L_{B}) angeschlossen sind.

13. Schaltungsanordnung nach einem der Ansprüche 10 bis 12,
**dadurch gekennzeichnet, dass** die Gasentladungslampen durch Leuchtstofflampen oder durch Natriumdampfniederdrucklampen (01) gebildet sind, die jeweils mit einer Spule (02) in Reihe geschaltet sind.

14. Schaltungsanordnung nach einem der Ansprüche 10 bis 13,
**dadurch gekennzeichnet, dass** die zweite Wechselspannung trapezförmig ist und einen konstanten Effektivwert aufweist.

## Claims

1. An electronic ballast unit for the operation of at least one gas discharge lamp (01) from an AC voltage source, comprising a rectifier (07) for the rectification of a first AC voltage of the AC voltage source into a DC voltage, and an inverter (11) for the inversion of the DC voltage into a second AC voltage for purposes of supplying the gas discharge lamp (01), wherein the frequency of the second AC voltage can be altered, wherein the rectifier (07) is embodied for the rectification of a single-phase AC voltage of the AC voltage source, wherein the ballast unit furthermore comprises a filter (03) for the suppression of radio interference on the first AC voltage, wherein the filter (03) comprises a first single-stage individual filter (04) and a second single-stage individual filter (06); these are electrically connected between an input (L, N) of the ballast unit provided for connection to the AC voltage source and the rectifier (07), **characterised in that** the first individual filter (04) is solely arranged in an electromagnetically screening housing, and **in that** the second individual filter (06) is formed in terms of electronic components that are arranged electromagnetically unscreened relative to the rectifier (07) and the inverter (11).

2. The electronic ballast unit in accordance with claim 1, **characterised in that** the electronic components (L₂) of the second individual filter (06) are arranged together with electronic components (D_{GR}) of the rectifier (07) and the inverter (11) on a circuit substrate.

3. The electronic ballast unit in accordance with claim 1 or 2, **characterised in that** a frequency band suppressed by the filter (03) is formed from a first sub-band and a second sub-band, wherein the first sub-band comprises a higher frequency range than the second sub-band, and wherein the first sub-band is suppressed by the first individual filter (04), and the second sub-band is suppressed by the second individual filter (06).

4. The electronic ballast unit in accordance with one of the claims 1 to 3, **characterised in that** it comprises an output filter (12) for the suppression of radio interference on the second AC voltage, which is electrically connected between the inverter (11) and an output (L_{A}, L_{B}) of the ballast unit provided for purposes of connection to the gas discharge lamp (01).

5. The electronic ballast unit in accordance with one of the claims 1 to 4, **characterised in that** the second AC voltage is trapezoidal in shape and has a constant effective value.

6. The electronic ballast unit in accordance with one of the claims 1 to 5, **characterised in that** it furthermore comprises a step-down converter (09), by means of which the DC voltage can be lowered.

7. The electronic ballast unit in accordance with one of the claims 1 to 6, **characterised in that** it furthermore comprises a power factor correction filter (08) for purposes of reducing the reactive current components of the first DC voltage, which filter is preferably electrically connected between the rectifier (07) and the inverter (11).

8. The electronic ballast unit in accordance with one of the claims 1 to 7, **characterised in that** the inverter (11) is formed in terms of a bridge circuit with a single-phase output, or has a two-phase output for purposes of supplying a plurality of gas discharge lamps (01).

9. The electronic ballast unit in accordance with one of the claims 1 to 8, **characterised in that** on its input side it comprises a reactive power compensation unit, by means of which any reactive power compensation on the gas discharge lamp (01) is, at least for the most part, substituted.

10. A circuit arrangement for the operation of spatially distributed gas discharge lamps (01) from an AC voltage source, the AC voltage of which is distributed over a wiring length with a cable (16) with at least four conductors (L, N, L_{A}, L_{B}) , wherein the circuit arrangement has gas discharge lamps and a wiring length with a cable (16) with at least four conductors (L, N, L_{A}, L_{B}) , **characterised in that** a first pair of conductors (L, N) is laid out so as to be connected to a single-phase AC voltage, wherein the first pair of conductors (L, N) is electrically connected with an input of a ballast unit (17) in accordance with one of the claims 1 to 9, and **in that** an output voltage of the ballast unit (17) is applied to a second pair of conductors (L_{A}, L_{B}), wherein the second pair of conductors (L_{A}, L_{B}) is electrically connected to the gas discharge lamps (01).

11. The circuit arrangement in accordance with claim 10, **characterised in that** a plurality of sections (18) of the wiring length are designed, between which the second pair of conductors (L_{A}, L_{B}) is electrically separated, wherein in each section (18) on the second pair of conductors (L_{A}, L_{B}) the output voltage of one of the plurality of ballast units (17) is applied in each case.

12. The circuit arrangement in accordance with claim 11, **characterised in that** in at least one of the sections (18) of the wiring length a plurality of the gas discharge lamps (01) are electrically connected to the second pair of conductors (L_{A}, L_{B}).

13. The circuit arrangement in accordance with one of the claims 10 to 12, **characterised in that** the gas discharge lamps are formed in terms of fluorescent lamps or low-pressure sodium vapour lamps (01); in each case these are connected with a coil (02) in series.

14. The circuit arrangement in accordance with one of the claims 10 to 13, **characterised in that** the second AC voltage is trapezoidal in shape and has a constant effective value.

## Revendications

1. Ballast électronique pour faire fonctionner au moins une lampe à décharge gazeuse (01) au niveau d'une source de tension alternative, comprenant un redresseur (07) pour redresser une première tension alternative de la source de tension alternative en une tension continue ; et un onduleur (11) pour convertir la tension continue en une deuxième tension alternative afin d'alimenter la lampe à décharge gazeuse (01), la fréquence de la deuxième tension alternative étant variable, le redresseur (07) étant étudié pour redresser une tension alternative monophasée de la source de tension alternative, le ballast comprenant en outre un filtre (03) pour l'antiparasitage de la première tension alternative, le filtre (03) comprenant un premier filtre individuel à un étage (04) et un deuxième filtre individuel à un étage (06), lesquels sont connectés électriquement entre une entrée (L, N) du ballast prévue pour le raccordement à la source de tension alternative et le redresseur (07), **caractérisé en ce que** le premier filtre individuel (04) est disposé à lui seul dans un boîtier de blindage électromagnétique, et **en ce que** le deuxième filtre individuel (06) est formé par des composants électroniques, lesquels sont disposés de manière non blindée électro-magnétiquement par rapport au redresseur (07) et à l'onduleur (11).

2. Ballast électronique selon la revendication 1, **caractérisé en ce que** les composants électroniques (L₂) du deuxième filtre individuel (06) sont disposés, ensemble avec des composants électroniques (D_{GR}) du redresseur (07) et de l'onduleur (11), sur un support de circuit.

3. Ballast électronique selon les revendications 1 ou 2, **caractérisé en ce qu'**une bande de fréquence atténuée par le filtre (03) est formée par une première bande partielle et par une deuxième bande partielle, moyennant quoi la première bande partielle comprend une plage de fréquences plus élevée que la deuxième bande partielle ; et moyennant quoi la première bande partielle est atténuée par le premier filtre individuel (04) et la deuxième bande partielle étant atténuée par le deuxième filtre individuel (06).

4. Ballast électronique selon l'une des revendications 1 à 3, **caractérisé en ce qu'**il comprend un filtre de sortie (12) pour l'antiparasitage de la deuxième tension alternative, lequel est connecté électriquement entre l'onduleur (11) et une sortie (L_{A}, L_{B}) du ballast prévue pour le raccordement à la lampe à décharge gazeuse (01).

5. Ballast électronique selon l'une des revendications 1 à 4, **caractérisé en ce que** la deuxième tension alternative est en forme de trapèze et présente une valeur efficace constante.

6. Ballast électronique selon l'une des revendications 1 à 5, **caractérisé en ce qu'**il comprend en outre un convertisseur abaisseur (09) grâce auquel il est possible d'abaisser la tension continue.

7. Ballast électronique selon l'une des revendications 1 à 6, **caractérisé en ce qu'**il comprend en outre un filtre de correction de facteur de puissance (08) pour réduire les parts de courant déwatté de la première tension alternative, lequel est de préférence connecté électriquement entre le redresseur (07) et l'onduleur (11).

8. Ballast électronique selon l'une des revendications 1 à 7, **caractérisé en ce que** l'onduleur (11) est formé par un montage en pont avec une sortie monophasique ou une sortie biphasique pour l'alimentation de plusieurs lampes à décharge gazeuse (01).

9. Ballast électronique selon l'une des revendications 1 à 8, **caractérisé en ce qu'**il comprend, côté entrée, une unité de compensation de la puissance réactive grâce à laquelle une compensation de la puissance réactive au niveau de la lampe à décharge gazeuse (01) est au moins en grande partie remplacée.

10. Agencement de circuit pour faire fonctionner des lampes à décharge gazeuse (01) réparties dans l'espace sur une source de tension alternative, dont la tension alternative est répartie via une section de ligne avec un câble (16) avec au moins quatre conducteurs (L, N, L_{A}, L_{B}), l'agencement de circuit présentant des lampes à décharge gazeuse et une section de ligne avec un câble avec au moins quatre conducteurs (L, N, L_{A}, L_{B}) , **caractérisé en ce qu'**une première paire des conducteurs (L,N) est étudiée pour être raccordée à une tension alternative monophasée, moyennant quoi la première paire des conducteurs (L, N) est en connexion électrique avec une entrée d'un ballast (17) selon l'une des revendications 1 à 9 ; et **en ce qu'**une tension de sortie du ballast (17) est appliquée à une deuxième paire des conducteurs (L_{A}, L_{B}), moyennant quoi la deuxième paire des conducteurs (L_{A}, L_{B}) est raccordée électriquement aux lampes à décharge gazeuse (01).

11. Agencement de circuit selon la revendication 10, **caractérisé en ce que** plusieurs tronçons (18) de la section de ligne sont réalisés, entre lesquels la deuxième paire des conducteurs (L_{A}, L_{B}) est séparée électriquement, moyennant quoi l'on applique, dans chaque tronçon (18), à la deuxième paire de conducteurs (L_{A}, L_{B}), la tension de sortie de respectivement l'un parmi plusieurs des ballasts (17).

12. Agencement de circuit selon la revendication 11, **caractérisé en ce que**, dans au moins l'un des tronçons (18) de la section de ligne, plusieurs des lampes à décharge gazeuse (01) sont raccordées électriquement à la deuxième paire des conducteurs (L_{A}, L_{B}).

13. Agencement de circuit selon l'une des revendications 10 à 12, **caractérisé en ce que** les lampes à décharge gazeuse sont formées par des lampes fluorescentes ou par des lampes à vapeur de sodium basse pression (01), lesquelles sont respectivement connectées en série avec une bobine (02).

14. Agencement de circuit selon l'une des revendications 10 à 13, **caractérisé en ce que** la deuxième tension alternative est de forme trapézoïdale et présente une valeur efficace constante.
